# EUROPÄISCHE PATENTSCHRIFT

(11) **EP 1 816 011 B1**
(45) Veröffentlichungstag und Bekanntmachung des Hinweises auf die Patenterteilung: **21.04.2010**
(21) Anmeldenummer: 06125298.7
(22) Anmeldetag: 04.12.2006
(51) Int. Cl.: B60C 9/02

(54) **Festigkeitslage für Ultra High Performance Luftreifen in Radialbauweise, insbesondere für die Herstellung von Reifenkarkassen, sowie Verfahren zum Aufbau der Festigkeitslage auf einer Reifenaufbautrommel**
Reinforcement layer for Ultra High Performance pneumatic tyres with radial construction, in particular for producing tyre carcasses, and method to mount the reinforcement layer on a tyre assembly drum
Couche de renforcement pour des pneus Ultra High Performance dans une construction radiale, en particulier pour la fabrication de carcasses de pneus, tout comme procédé de montage de la couche de renforcement sur un tambour de montage de pneus

(30) Priorität: 07.02.2006 DE 102006005457
(43) Veröffentlichungstag der Anmeldung: 08.08.2007
(73) Patentinhaber: Continental Reifen Deutschland GmbH, 30165 Hannover (DE)
(72) Erfinder: van Barneveld, Claus, 30827, Garbsen (DE); Wahl, Günter, 31249, Hohenhameln (DE)
(74) Vertreter: Finger, Karsten

(56) Entgegenhaltungen:
- CA-A1- 1 260 812
- DE-A1- 2 837 674
- DE-A1- 3 740 827

## Beschreibung

Die Erfindung betrifft eine Festigkeitslage für Ultra High Performance Luftreifen in Radialbauweise, insbesondere für die Herstellung von Reifenkarkassen, wobei die Festigkeitslage aus mehreren hintereinander zu einer Materialbahn angeordneten Festigkeitslagenabschnitten besteht, welche quer zur Längsrichtung verlaufende, in Kautschuk eingebettete Festigkeitsträger aufweist, sowie ein Verfahren zum Aufbau der Festigkeitslage auf einer Reifenaufbautrommel.

Derartige Festigkeitslagen, insbesondere für die Herstellung von Reifenkarkassen, sind hinreichend bekannt.

Festigkeitsträger werden in Kautschukmischungen eingebettet, indem eine Schar von im wesentlichen parallel zueinander liegende Festigkeitsträger, zumeist Cordfäden, in Längsrichtung einen Kalander zur Ummantelung mit einer Kautschukmischung durchlaufen. Um anschließend Materialbahnen für den Karkassenaufbau von Radialreifen zu erzeugen, bei denen die Festigkeitsträger quer zur Längsausrichtung der Materialbahn verlaufen, wird die Ausgangsbahn senkrecht zur Längsrichtung geschnitten und die einzelnen Festigkeitslagenabschnitte unter geringfügiger Überlappung von idealer Weise drei Corden zu einer längeren Bahn zusammengefügt. Bei der PKW-Reifenherstellung kommen insbesondere in Kautschuk eingebettete textile Festigkeitsträger wie Polyester, Nylon oder Aramid zum Einsatz.

Bei der Reifenherstellung sind die Verfahren zur Verarbeitung einer solchen Materialbahn auf einer Reifenaufbautrommel zu einer Karkasslage je nach Anforderungen an den PKW-Reifen verschieden.

Bei der Herstellung von einem PKW-Luftreifen mit basic performance, der für Geschwindigkeiten von bis zu 300 km/h geeignet ist, wird im Laufe des Herstellungsprozesses ein Abschnitt der Materialbahn aus in Kautschuk eingebetteten Festigkeitsträgern um die Reifenaufbautrommel gewickelt. Der Abschnitt weist eine solche Länge auf, dass er einmal um die Trommel reicht und die Enden zur Sicherstellung einer geschlossenen Schicht ebenfalls überlappend angeordnet sind. Eine derart hergestellte Karkasse weist mindestens an der Stelle zum Schließen der Schicht einen Überlappungsbereich auf. Es können aber auch zwei oder mehr Überlappungsbereiche in einer Reifenkarkasse vorkommen. In den Überlappungsbereichen liegt eine Verdopplung der Materialstärke vor und die Dichte der Festigkeitsträger ist doppelt so hoch wie in den anderen Bereichen der Karkasse. Hieraus ergeben sich Auswirkungen wie z.B. Verstrammungen und Einschnürungen in den Seitenwänden, welche hauptsächlich zu optischen Nachteilen, weniger zur Verschlechterung der Uniformity führen. Zur Vermeidung dieser zumeist optischen Nachteile wurden verschiedenste Maßnahmen offenbart. In der CA 1 260 812 wurde zur Vermeidung von Einschnürungen und zur Verbesserung der Uniformity beispielsweise vorgeschlagen, Säume mit Festigkeitsträgern an den Kanten der Ausgangsbahn anzuordnen, die gegenüber den Corden außerhalb des Saumes eine 3-6 fache Verdrehung aufweisen und die die überlappenden Bereiche bilden.

Aus der DE 37 40 827 A1 ist es bekannt, innerhalb einer Karkasslage zwei Festigkeitsträger aus zwei unterschiedlichen Materialien einzusetzen. So sollen im Saum, welcher den Überlappungsbereich des Halbfertigfabrikates bildet, zur Vermeidung von Einschnüreffekten Festigkeitsträger aus einem niedrig moduligen Material und im Gewebe Festigkeitsträger aus einem höher moduligen Material einsetzt werden.

Aus der gattungsbildenden DE 28 37 674 A ist ein Cordgewebe mit Nylonfestigkeitsträgern für Autoreifen bekannt, welches im Saum Festigkeitsträger geringeren Durchmessers und im Gewebe Festigkeitsträger eines größeren Durchmessers aufweist.

Anders verhält es sich bei Ultra High Performance (UHP) Luftreifen. Denn an die Karkassen der UHP-Reifen sind besondere Anforderungen, insbesondere durch die durch Hochgeschwindigkeiten von über 300 km/h auftretende enorme Wärmeentwicklung und die bei einem UHP-Reifen stark verminderte Querschnittshöhe gegenüber basic performance Reifen gestellt. Daher unterscheidet sich der Festigkeitslagenaufbau (Karkassenaufbau) eines UHP-Reifens dadurch, dass keine Überlappungen innerhalb der Karkasse auftreten sollen. Denn eine Überlappung zweier Festigkeitslagenabschnitte verursacht bei einem solchen UHP-Reifen mit stark verminderter Querschnittshöhe keine Seitenwandeinschnürungen, sondern es treten völlig anders geartete Probleme auf. Ein Hauptproblem im Fahrbetrieb ist beispielsweise, dass an den Überlappungen so genannte "Hot Spots", also lokale Hitzebereiche, auftreten, die durch die Verdopplung von schlecht wärmeleitendem Kautschuk entstehen. Die Folge von solchen Hot Spots ist die Erwärmung der umliegenden Kautschukmischung über die für Kautschuk kritische Temperatur von über 130°C hinaus, so dass eine Materialschwächung stattfindet, die den Reifen unbrauchbar macht. Das Kautschukmaterial kocht aus. Ein weiteres Problem sind beispielsweise Stauchungen im Bereich der Überlappungen, die zu einer Herabsetzung der für UHP-Reifen notwendigen dynamischen Beständigkeit der Festigkeitsträger führen.

Um diesen veränderten Anforderungen an UHP-Reifen gerecht zu werden, gibt es eine Vorrichtung, mit der die Reifenkarksse mit dem so genannten "butt-splice" (Stoß-Zusammensetzung), also einer Anordnung zweier Materialabschnitte stumpf neben- und aneinander anstatt einer Überlappung beider Materialabschnitte, ausgeführt werden kann. Diese Vorrichtung ist aber in der Anschaffung teuer und es wird zum Aufbau dieser Vorrichtung zusätzlicher Platz neben den vorhandenen Maschinen benötigt, der in der bis zum letzten Winkel genutzten Fabrikationshalle oftmals nicht vorhanden ist. Bei dem butt-splice Verfahren kann es zudem vorkommen, dass die Schnitte derart ungünstig angeordnet sind, dass die an einander zu fügenden Kanten kurz vor dem nächsten Festigkeitsträger getrennt wurden, so dass bei einer butt-splice Verbindung ein mit Kautschuk ausgefüllter Abstand zwischen zwei Festigkeitsträgern entstanden ist, der fast doppelt so groß wie üblich ist. Die Festigkeit der Karkasse ist herabgesetzt.

In einem anderen Verfahren wird bei der UHP-Reifenherstellung die Karkasse abweichend von den vorgeschriebenen Verfahren derart aufgebaut, dass ein Stück der vom Servicer herangeführten Materialbahn der eingangs beschriebenen Art auf die Reifenaufbautrommel aufgelegt wird, dass in einem zweiten Schritt eine in dem Materialstück auftretende Überlappung manuell herausgetrennt wird und die herausgetrennte Überlappung als Abfall zu entsorgen ist. In einem dritten Schritt muss ein weiteres vom Servicer herangeführtes Materialstück an das freie Ende des bereits auf die Aufbautrommel aufgebrachten Materialstückes mit einem Stumpfspleiß, also ohne Überlappung in der Weise auf der Aufbautrommel angeordnet werden, dass die Kanten beider Materialenden direkt nebeneinander liegen. Zur Schließung der Karkasslage über den Umfang ist ein weiterer Stumpfspleiß anzubringen.

Ein derartiges Verfahren zum Aufbau einer UHP-Karkasse ist zeitaufwendig und durch die Vielzahl an notwendigen Arbeitsschritten teuer und ineffektiv. Das Verfahren ist materialintensiv und durch das zeitaufwendige Aufbauverfahren und durch die während der Herstellung anfallenden Abfallmenge materialaufwendig und teuer.

Es ist die Aufgabe der Erfindung, eine Festigkeitslage bereitzustellen, die den Anforderungen an eine Karkasse eines Ultra High Performance-Reifen gerecht wird und mit der im Herstellungsprozess des Reifens der Karkassenaufbau wesentlich vereinfacht und kostenvergünstigt werden kann. Die Herstellung soll auf üblichen Reifenaufbautrommeln vorgenommen werden können.

Gelöst wird die Aufgabe dadurch, dass die Festigkeitsträger aus Rayon bestehen, dass zwei benachbarte Festigkeitslagenabschnitte an ihren einander zugewandten Kantenbereichen überlappend angeordnet sind und dass zumindest an einer (Quer-)kante der überlappenden Festigkeitslagenabschnitte ein Saum ausgebildet ist, in dem die Festigkeitsträger einen geringeren Durchmesser als die Festigkeitsträger außerhalb des Saumes aufweisen.

Es ist eine Festigkeitslage in Form einer UHP-Reifenkarkasse geschaffen, bei der die Festigkeitsträger aus bis zu ca. 180°C hitzebeständigem Rayon bestehen - eine Temperatur, die von einem UHP-Reifen im Fahrbetrieb nicht erreicht wird. Eine Schwächung bzw. der Verfall der Karkasse durch Hitzeeinwirkung, wie er bei textilen Festigkeitsträgern aus Nylon oder Polyester bereits ab ca. 130°C auftritt, ist verhindert. Der Vorteil der erfindungsgemäßen Festigkeitslage liegt darin, dass in Abkehr zum bisher technisch üblichen Aufbau einer UHP-Festigkeitslage, nämlich gerade die Vermeidung von überlappenden Bereichen unter Einsatz von teuren Vorrichtungen zur Ausführung des buttsplices bzw. die manuelle Anordnung von Stumpfspleißen zur Vermeidung von Überlappung eine Festigkeitslage geschaffen worden ist, die trotz überlappender Abschnitte optimale Eigenschaften einer UHP-Festigkeitslage aufweist. Das Verarbeiten einer derartigen Karkasse ist kostengünstig und effizient.

Der Erfindung liegt ebenfalls zugrunde, dass bei Niederquerschnittsreifen, wie bei einem UHP-Reifen für High Speed, die erfindungsgemäße Überlappung zweier Festigkeitslagenabschnitte keine Seitenwandeinschnürungen hervorruft und das Auskochen des Kautschukmaterials ebenso wie Stauchungen vermieden sind.

Das Verfahren zum Aufbau einer Festigkeitslage für einen Ultra High Performance Luftreifen in Radialbauart auf einer Reifenaufbautrommel unter Verwendung einer Festigkeitslage gemäß zumindest einer der genannten Ausführungen zeichnet sich dadurch aus, dass die hintereinander zu einer Materialbahn angeordneten, überlappenden Festigkeitslagenabschnitte auf der bereits auf die Reifenaufbautrommel aufgebrachten Innenschicht derart über den Umfang der Aufbautrommel angeordnet wird, dass die Festigkeitslage nach einem vollständigen Umlauf um die Trommel in axialer Richtung durchtrennt wird und man die über den gesamten Umfang aufgebrachte Festigkeitslage in einem Stumpfspleiß enden läßt.

Die Ausführung des erfindungsgemäßen Verfahrens in Abkehr zum Stand der Technik ist besonders vorteilhaft, weil das Verfahren auf einer herkömmlichen Reifenaufbautrommel auszuführen ist und keine zusätzliche Vorrichtung eingesetzt werden muss. Dieses spart hohe Anschaffungskosten. Weiterhin sind die durch dieses Verfahren beschriebenen Arbeitsschritte weniger zeit- und kostenintensiv. Hoher Ausschuss durch das ehemals notwenige Heraustrennen von Überlappungen aus der Materialbahn entfallen ebenso wie das zeitaufwendige Neuansetzen der Materialbahn auf der Reifenaufbautrommel. Es werden hochqualitative UHP-Reifenkarkassen geschaffen.

In einer bevorzugten Ausführungsform der Festigkeitslage weist jede Kante im überlappenden Bereich einen Saum auf, in dem die Festigkeitsträger beider Säume einen geringeren Durchmesser als außerhalb des Saumes aufweisen. Hierdurch kann bei einer Stärke des Festigkeitsträgers im Bereich des Saumes von 1840 dTex x 2, vorzugsweise einer Stärke von 1240 dTex x 2 und außerhalb des Saumes von 2440 dTex x 2 die Dicke des Saummateriales verringert bis idealerweise halbiert werden, so dass bei Überlappung zweier Säume annähernd die gleiche Dicke der Festigkeitslage über den gesamten Umfang erreicht wird. Stauchungen oder die Bildungen von Hot Spots treten im Fahrbetrieb nicht auf.

In einer weiteren Ausführungsform weisen die Festigkeitsträger im Bereich des Saumes eine Stärke von maximal 1240 dTex x 2 und außerhalb des Saumes eine Stärke von 1840 dTex x 2 auf.

Vorteilhaft ist es, wenn im Saum bis zu acht beabstandet nebeneinander liegende Festigkeitsträger angeordnet sind. Hierdurch ist die Möglichkeit geschaffen, dass die Überlappung bei der Herstellung der Materialbahn einfach herzustellen ist. Denn überraschenderweise brauchen nicht alle Saumfestigkeitsträger für die erwünschte Festigkeit der UHP-Karkasse zu überlappen; für die Festigkeit der Karkasse reicht es aus, wenn der Saum mit 5-8, vorzugsweise mit 5 oder 6 Festigkeitsträgern überlappt. Somit sind auch bei etwaigem ungenauem Übereinanderlegen der Saumbereiche bei Herstellung der Materialbahn kein Nachteil in der Festigkeit der Karkasse oder sonstige Nachteile zu befürchten. Bei einer Reifenbauart mit normaler Querschnittshöhe, wie für PKW-Reifen mit basic performance, würden nicht exakt übereinander angeordnete Säume zu einer Aufwölbung im Überlappungsbereich führen und weitere Nachteile wie verminderte Platzfestigkeit nach sich ziehen.

Vorteilhaft ist es, wenn die Festigkeitslage neben überlappenden Säumen nur einen Stumpfspleiß aufweist. Dieser eine Stumpfspleiß ist notwendig, um das von der Materialbahn entnommene Festigkeitslagenmaterial für die Karkasse auf der Reifenaufbautrommel ohne überhöhte Materialdicke über den Umfang der Reifenaufbautrommel zu schließen.

Die Erfindung wird anhand der Zeichnungen, die schematische Ausführungsbeispiele darstellen, näher erläutert. Es zeigen die
- Fig. 1: die Herstellung einer erfindungsgemäßen Festigkeitslagenbahn
- Fig.2: einen Querschnitt im überlappenden Saumbereich der Karkasslage
- Fig.3: einen Querschnitt in einem weiteren überlappenden Saumbereich der Karkasslage.

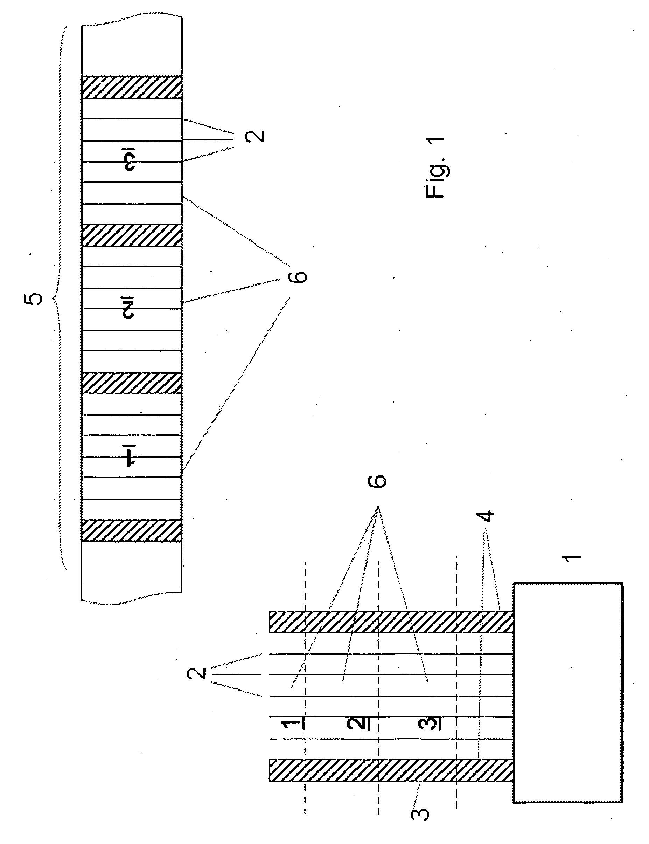

Die Fig. 1 zeigt einen Kalander 1, den eine Schar von im wesentlichen parallel zueinander liegende Festigkeitsträger 2, Cordfäden aus Rayon, in Längsrichtung zur Ummantelung mit einer (nicht dargestellten) Kautschukmischung durchlaufen. Die hierdurch erzeugte Ausgangsbahn 3 weist an beiden Längskanten jeweils einen Saum 4 auf, in dem Rayon-Festigkeitsträger parallel und gleich zueinander beabstandet angeordnet sind, die aber einen nur halb so großen Durchmesser aufweisen, wie die außerhalb der Säume angeordneten Festigkeitsträger 2. Um Materialbahnen 5 für den Karkassenaufbau von UHP-Radialreifen zu erzeugen, bei denen die Festigkeitsträger 2 quer zur Längsrichtung der Materialbahn 5 angeordnet sind, wird die Ausgangsbahn 3 senkrecht zu ihrer Längsrichtung geschnitten und die einzelnen Festigkeitslagenabschnitte 6 unter einer Überlappung von zwei Säumen 4 benachbarter Festigkeitsträgerabschnitten zu einer längeren Materialbahn 5 zusammengefügt. Die Materialbahn wird auf eine Rolle aufgerollt, die in den Servicer an der Reifenaufbaustation eingehängt wird und von der das Material für die Festigkeitslage während des Reifenaufbauverfahrens abgewickelt wird. Eine Materialrolle stellt Festigkeitslagen für mehrere Karkasslagen bereit. Die Dicke der kautschukummantelten Festigkeitslage beträgt zwischen 1,2mm und 1,3mm bei einem Durchmesser der Festigkeitsträger im Saum von 0,4 - 0,7mm, außerhalb des Saumes von 0,7 - 1,0mm.

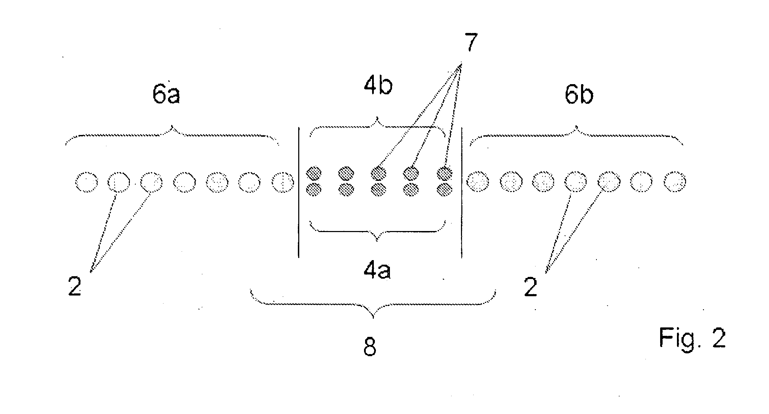

In der Fig.2 ist ein Ausschnitt eines Querschnittes der UHP-Karkasse im Bereich einer Überlappung von zwei Säumen 4a, 4b zweier benachbarter Festigkeitslagenabschnitten 6a, 6b dargestellt. Die Karkasse ist aus der in Fig. 1 beschriebenen Materialbahn 5 gefertigt. Die Festigkeitsträger 7 innerhalb des Saumes 4a, 4b weisen einen geringeren Durchmesser als die außerhalb des Saumes angeordneten Festigkeitsträger 2. Der Abstand zwischen allen Festigkeitsträgern 2, 7 des Abschnittes 6 ist aber in allen Bereichen gleich groß. Der Saum 4a, 4b weist fünf Festigkeitsträger 7 auf, die ideal derart überlappen, dass die fünf Festigkeitsträger des Saumes 4b auf den fünf Festigkeitsträgern des Saumes 4a angeordnet sind. Die Dicke im Bereich der Überlappung der Säume 4a, 4b ist im wesentlichen gleich der Dicke des außerhalb des Saumes liegenden Bereiches.

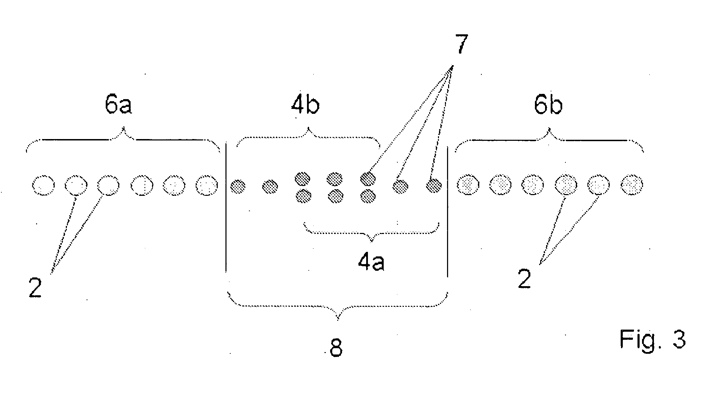

Die Fig.3 zeigt im Vergleich zur Fig.2 einen anderen Ausschnitt des Karkassquerschnittes im Bereich einer Überlappung von zwei Säumen 4a, 4b. Hier überlappen von dem aus fünf Festigkeitsträgern 7 bestehenden Saum 4a, 4b nur drei Festigkeitsträger 7, während die dem Mittenbereich des Festigkeitsträgerabschnittes zugewandten zwei verbleibenden Festigkeitsträger 7 des Saumes frei, also nicht überlappend angeordnet sind. Obwohl diese Anordnung keine ideale Überlappung gemäß der Fig. 2 darstellt, sind jedoch mit dieser Art der Überlappung der Fig. 3 keine Nachteile für einen UHP-Reifen mit geringerer Querschnittshöhe verbunden.

Der Bereich der Überlappung 8 ist bei der nicht idealen Ausbildung der Fig.3 in Umfangsrichtung länger als bei der idealen Ausbildung der Überlappung der Fig.2. Aufgrund der geringen Querschnittshöhe des UHP-Reifens entstehen keine qualitätsmindernden Erscheinungen.

### Bezugszeichenliste

### (Teil der Beschreibung)

- 1: Kalander
- 2: Festigkeitsträger
- 3: Ausgangsbahn
- 4: Saum
- 5: Materialbahn
- 6: Festigkeitslagenabschnitt
- 7: Festigkeitsträger (Saum)
- 8: Überlappungsbereich

## Patentansprüche

1. Festigkeitslage für Ultra High Performance Luftreifen in Radialbauweise, insbesondere für die Herstellung von Reifenkarkassen, wobei die Festigkeitslage aus mehreren hintereinander zu einer Materialbahn (5) angeordneten Festigkeitslagenabschnitten (6) besteht, welche quer zur Längsrichtung verlaufende, in Kautschuk eingebettete Festigkeitsträger (2, 7) aufweisen, wobei zwei benachbarte Festigkeitslagenabschnitte (6) an ihren einander zugewandten Kantenbereichen überlappend angeordnet sind und dass zumindest an einer Querkante der überlappenden Festigkeitslagenabschnitte (6) ein Saum (4) ausgebildet ist, in dem die Festigkeitsträger (7) einen geringeren Durchmesser als die Festigkeitsträger (2) außerhalb des Saumes (4) aufweisen,
**dadurch gekennzeichnet, dass** die Festigkeitsträger (2, 7) aus Rayon bestehen.

2. Festigkeitslage nach Anspruch 1,
**dadurch gekennzeichnet,**
**dass** die Festigkeitsträger (2, 7) Corde sind.

3. Festigkeitslage nach einem der vorangehenden Ansprüche,
**dadurch gekennzeichnet,**
**dass** jede Kante im überlappenden Bereich einen Saum (4) aufweist, in dem die Festigkeitsträger (7) einen geringeren Durchmesser als außerhalb des Saumes (4) aufweisen.

4. Festigkeitslage nach einem der vorangehenden Ansprüche,
**dadurch gekennzeichnet,**
**dass** die Festigkeitsträger (7) im Bereich des Saumes (4) eine Stärke von 1840 dTex x 2, vorzugsweise eine Stärke von 1240 dTex x 2 und außerhalb des Saumes (4) eine Stärke von 2440 dTex x 2 aufweisen.

5. Festigkeitslage nach einem der Ansprüche 1-3,
**dadurch gekennzeichnet,**
**dass** die Festigkeitsträger (7) im Bereich des Saumes (4) eine Stärke von 1240 dTex x 2 und außerhalb des Saumes (4) eine Stärke von minimal 1840 dTex x 2 aufweisen.

6. Festigkeitslage nach einem der vorangehenden Ansprüche,
**dadurch gekennzeichnet,**
**dass** der Saum (4) bis zu 8 beabstandet nebeneinander angeordnete Festigkeitsträger (7) aufweist.

7. Festigkeitslage nach Anspruch 6,
**dadurch gekennzeichnet,**
**dass** der Saum (4) mit 3-8, vorzugsweise mit 3 - 6 Festigkeitsträgern (7) überlappt.

8. Festigkeitslage einem der vorangehenden Ansprüche,
**dadurch gekennzeichnet,**
**dass** die Festigkeitslage neben überlappenden Säumen (4) nur einen Stumpfspleiß aufweist.

9. Verfahren zum Aufbau einer Festigkeitslage für einen Ultra High Performance Luftreifen in Radialbauart auf einer Reifenaufbautrommel unter Verwendung einer Festigkeitslage gemäß zumindest einem der Ansprüche 1-8,
**dadurch gekennzeichnet,**
**dass** die hintereinander zu einer Materialbahn (5) angeordneten überlappenden Festigkeitslagenabschnitte (6) auf der bereits auf die Reifenaufbautrommel aufgebrachten Innenschicht derart über den Umfang der Aufbautrommel angeordnet werden,
**dass** die Festigkeitslage nach einem vollständigen Umlauf um die Trommel in axialer Richtung durchtrennt wird und man die über den gesamten Umfang aufgebrachte Festigkeitslage in einem einzigen Stumpfspleiß enden lässt.

10. Ultra High Performance Luftreifen in Radialbauart, welcher eine Festigkeitslage gemäß zumindest einem der Ansprüche 1 - 8 aufweist.

## Claims

1. Reinforcement layer for ultra high performance pneumatic tyres of a radial construction, in particular for producing tyre carcasses, the reinforcement layer comprising multiple reinforcement layer sections (6) which are arranged one behind the other to form a material web (5) and have reinforcing elements (2, 7) extending transversely in relation to the longitudinal direction and embedded in rubber, two adjacent reinforcement layer sections (6) being arranged such that they overlap at their mutually facing edge regions and a seam (4) in which the reinforcing elements (7) have a smaller diameter than the reinforcing elements (2) outside the seam (4) being formed at least at one transverse edge of the overlapping reinforcement layer sections (6), **characterized in that** the reinforcing elements (2, 7) consist of rayon.

2. Reinforcement layer according to Claim 1, **characterized in that** the reinforcing elements (2, 7) are cords.

3. Reinforcement layer according to one of the preceding claims, **characterized in that** each edge in the overlapping region has a seam (4), in which the reinforcing elements (7) have a smaller diameter than outside the seam (4).

4. Reinforcement layer according to one of the preceding claims, **characterized in that** the reinforcing elements (7) in the region of the seam (4) have a thickness of 1840 dtex x 2, preferably a thickness of 1240 dtex x 2, and outside the seam (4) a thickness of 2440 dtex x 2.

5. Reinforcement layer according to one of Claims 1-3, **characterized in that** the reinforcing elements (7) in the region of the seam (4) have a thickness of 1240 dtex x 2 and outside the seam (4) a thickness of at least 1840 dtex x 2.

6. Reinforcement layer according to one of the preceding claims, **characterized in that** the seam (4) has up to 8 reinforcing elements (7) arranged spaced apart next to one another.

7. Reinforcement layer according to Claim 6, **characterized in that** the seam (4) overlaps with 3-8, preferably with 3-6, reinforcing elements (7).

8. Reinforcement layer according to one of the preceding claims, **characterized in that**, apart from overlapping seams (4), the reinforcement layer only has one butt splice.

9. Method for building a reinforcement layer for an ultra high performance pneumatic tyre of a radial construction on a tyre building drum using a reinforcement layer according to at least one of Claims 1-8, **characterized in that** the overlapping reinforcement layer sections (6), arranged one behind the other to form a material web (5), are arranged over the circumference of the tyre building drum on the inner layer that has already been applied to the building drum in such a way that, after one complete revolution around the drum, the reinforcement layer is severed in the axial direction and the reinforcement layer applied over the entire circumference is ended in a single butt splice.

10. Ultra high performance pneumatic tyre of a radial construction which has a reinforcement layer according to at least one of Claims 1-8.

## Revendications

1. Couche de renfort pour bandages pneumatiques à structure radiale et performances ultra-élevées, en particulier pour la fabrication de carcasses de bandage, la couche de renfort étant constituée de plusieurs parties (6) de couche de renfort qui sont disposées les unes à la suite des autres pour former une nappe de matériau (5) et qui présentent des renforts (2, 7) incorporés dans le caoutchouc et s'étendant transversalement par rapport au sens de sa longueur, deux parties (6) de couche de renfort voisines étant disposées de telle sorte que leurs bords tournés l'un vers l'autre se superposent et qu'une lisière (4) dans laquelle les renforts (7) ont un diamètre plus petit que celui des renforts (2) situés à l'extérieur de la lisère (4) soit formée au moins sur un bord transversal des parties (6) superposées de couche de renfort,
**caractérisée en ce que**
les renforts (2, 7) sont réalisés en rayonne.

2. Couche de renfort selon la revendication 1, **caractérisée en ce que** les renforts (2, 7) sont des câbles.

3. Couche de renfort selon l'une des revendications précédentes, **caractérisée en ce que** dans la partie superposée, chaque bord présente une lisière (4) dans laquelle les renforts (7) ont un diamètre plus petit qu'à l'extérieur de la lisière (4).

4. Couche de renfort selon l'une des revendications précédentes, **caractérisée en ce que** dans la zone occupée par la lisière (4), les renforts (7) présentent une épaisseur de 1 840 dtex x 2 et de préférence une épaisseur de 1 240 dtex x 2 et à l'extérieur de la lisière (4) une épaisseur de 2 440 dtex x 2.

5. Couche de renfort selon l'une des revendications 1 à 3, **caractérisée en ce que** dans la zone occupée par la lisière (4), les renforts (7) ont une épaisseur de 1 240 dtex x 2 et à l'extérieur de la lisière (4) une épaisseur d'au moins 1 840 dtex x 2.

6. Couche de renfort selon l'une des revendications précédentes, **caractérisée en ce que** la lisière (4) présente jusque 8 renforts (7) disposés à distance les uns à côté des autres.

7. Couche de renfort selon la revendication 6, **caractérisée en ce que** la lisière (4) recouvre 3 à 8 et de préférence 3 à 6 renforts (7).

8. Couche de renfort selon l'une des revendications précédentes, **caractérisée en ce qu'**en plus des lisières (4) superposées, la couche de renfort présente uniquement une ligature bout-à-bout.

9. Procédé de formation d'une couche de renfort pour bandage pneumatique à structure radiale et performances ultra-élevées sur un tambour de montage de bandage, en recourant à une couche de renfort selon au moins l'une des revendications 1 à 8,
**caractérisé en ce que**
les parties (6) de couche de renfort superposées, disposées les unes à la suite des autres pour former une nappe de matériau (5), sont disposées sur la couche intérieure déjà appliquée sur le tambour de montage de pneu à la périphérie du tambour de montage et
**en ce qu'**après avoir complètement entouré le tambour, la couche de renfort est découpée dans la direction axiale et la couche de renfort appliquée sur toute la périphérie est terminée en une unique ligature bout-à-bout.

10. Bandage pneumatique à structure radiale et performances ultra-élevées qui présente une couche de renfort selon au moins l'une des revendications 1 à 8.
